# EUROPEAN PATENT APPLICATION

(11) **EP 0 645 509 A1**
(43) Date of publication of application: **29.03.1995**
(21) Application number: 94307143.1
(22) Date of filing: 29.09.1994
(51) Int. Cl.: E05B 13/10, B60D 1/60, B62D 53/08

(54) **A lock**

(30) Priority: 29.09.1993 GB 9320097
(71) Applicant: INDESPENSION LIMITED, Bolton BL1 7AQ (GB)
(72) Inventor: Hargreaves, William, Bolton BL3 4QD (GB)
(74) Representative: Low, Peter John

(57) **Abstract**

A lock for a trailer coupling which operates to secure the coupling against operation without any positive locking steps being taken. The lock comprises a spool (16) in a housing (10). The spool is urged by a spring (22) into the locking position where a bolt (18), axially aligned with the spool projects from end (14) of the housing (10). The lock is released by a key received in a keyhole at the other end of the housing.

## Description

This invention relates to a lock and more particularly, but not exclusively, a lock for use with trailer couplings and the like.

Thefts of trailers whether coupled or uncoupled now present a serious security problem. One proposal for dealing with that problem is to make provision for some kind of lock such as a padlock to be fitted to the coupling which prevents the coupling being operated to detach the trailer from a vehicle and hitch it to another vehicle. The aforesaid proposals have been only partially successful in reducing trailer thefts because locking of the coupling requires some positive action on the part of the trailer owner, such as fitting the padlock and turning a key. Even these minimal tasks are frequently seen as being too irksome and hence thefts of trailers still occur.

There is, therefore, a need for some locking provision which will secure a coupling without the need for any positive operation on the part of the user. The present invention has been made in order to solve this problem.

According to the invention there is provided a lock comprising a housing, a locking spool movable in said housing between a locking position and an unlocked position, means for urging the spool into the locking position, means for releasably locking the spool to the housing in the locking position and a locking bolt fixed to the spool and extending outwardly through the housing, whereby movement of the spool causes corresponding movement in the same direction of the locking bolt.

In a preferred embodiment of the invention the housing and the spool are of corresponding cross-section which is preferably circular although other shapes can be adopted if required. The housing preferably takes the form of a cylinder which is open at one end to permit partial withdrawal therefrom of the spool. The locking bolt is fixed at the end of the spool adjacent the closed end of the cylinder and extends through an aperture in said closed end. Preferably the locking bolt is co-axially mounted on the spool. Preferably means may be provided for limiting the extent of travel of the spool within the housing. In addition means may also be provided for preventing the spool from rotating within the housing.

The lock of the invention is particularly suitable for use with trailer couplings. It can be mounted on a part of the coupling housing so that the locking bolt is receivable in an aperture in the coupling mechanism thereby preventing the coupling mechanism from being operated. The lock of the invention is not, however, restricted to that particular use.

A specific embodiment of the invention will now be described by way of example with reference to the accompanying drawings in which:-
Fig.1 is an axial section through a lock; and
Fig.2 is a front elevation of the lock of Fig.1.

Referring to the drawing the lock comprises a housing 10 in the form of a cylinder of circular cross-section and which has an open end 12 and a closed end 14. A spool 16 is slidably received in the housing 10. A locking bolt 18 is fixed to the end of the spool 16 adjacent the closed end 14 of the housing and extends through an aperture 20 in said closed end 14.

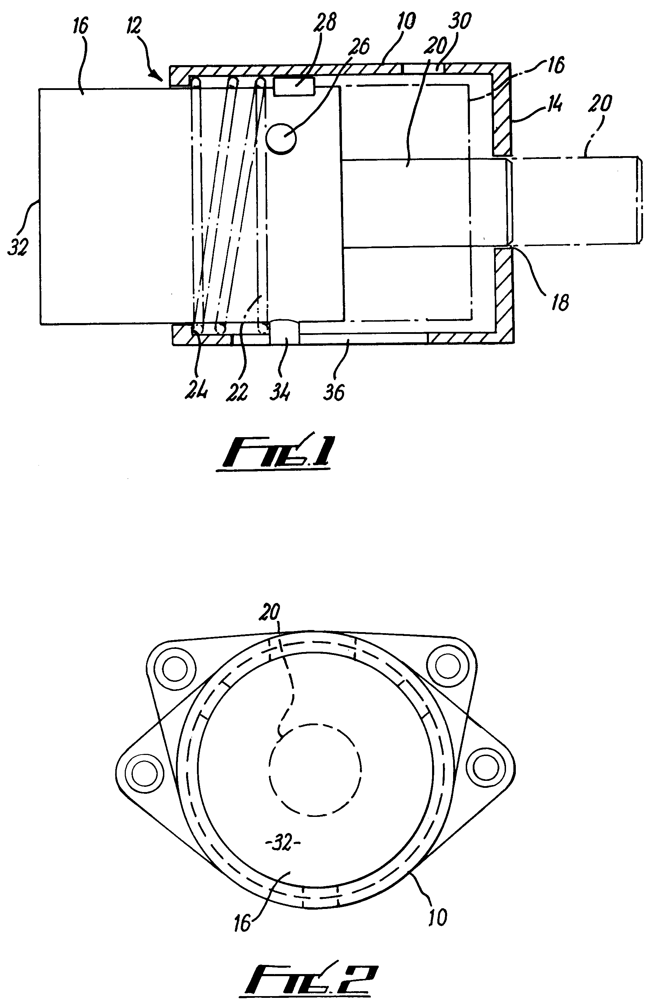

A compression spring 22 is disposed around the spool 16. One end of the spring bears against the inturned shoulders 24 at the open end 12 of the housing and the other end of the spring bears against a stud 26 on the spool. By this arrangement the spool and the locking bolt are urged towards the right as viewed in Fig.1 into the position shown in the chain dotted lines, wherein a latch 28 on the spool is brought into register
with an aperture 30 in the housing. The latch 28 can then engage the aperture 30 by virtue of key operable locking mechanism within the spool of the kind that is known and, therefore, not described further. In this position the spool is locked in the housing with the locking bolt projecting from the housing. Release of the latch 28 from the aperture 30 is effected by means of a key introduced through a keyhole (not shown) at the end 32 of the spool which is exposed at the open end of the housing. Having released the latch 28 from the aperture 30 the spool can be withdrawn from the housing, i.e. towards the left as viewed in Fig.1 of the drawing. The spool can be pulled against the action of the spring by using the key.

It is, of course, important, in this embodiment, that the spool should not rotate in the housing which might prevent engagement of latch 28 in aperture 30. To maintain correct alignment of the spool in the housing a stud 34 on the spool extends into a slot 36 in the housing. This arrangement also limits the axial travel of the spool.

The lock of the invention is particularly suited for use with trailer couplings and the like. The lock housing can be fitted onto the housing of a coupling and some internal part of the coupling provided with a bore which can receive the locking bolt 20 when the coupling is in its normal condition. This arrangement means that the coupling will be automatically locked by the lock of the invention without any special steps being required.

The invention is not restricted to the above described embodiment and many variations and modifications can be made.

For example means can be included to increase the security of the lock, such as a hardened steel pin in the locking bolt to make it more difficult to saw through the bolt. Other parts of the lock may be of hardened steel in order to make it more difficult to break the lock by drilling.

## Claims

1. A lock comprising a housing, a locking spool movable in said housing between a locking position and an unlocked position, means for urging the spool into the locking position, means for releasably locking the spool to the housing in the locking position and a locking bolt fixed to the spool and extending outwardly through the housing, whereby movement of the spool causes corresponding movement in the same direction of the locking bolt.

2. A lock as claimed in Claim 1, wherein the housing and spool are of complimentary cross-section which is preferably circular.

3. A lock as claimed in Claim 1 or Claim 2, wherein the housing is open at one end to permit at least partial withdrawal of the spool.

4. A lock as claimed in Claim 3, wherein the locking bolt is fixed to the other end of the spool.

5. A lock as claimed in any preceding claim, wherein means are provided for preventing rotation of the spool in the housing.

6. A lock as claimed in any preceding claim, wherein the means for releasably locking the spool to the housing is key operated.

7. A lock as claimed in any preceding claim in combination with a trailer coupling.

8. The combination as claimed in Claim 7, wherein the trailer coupling includes a housing and a coupling mechanism and wherein the lock is mounted on the housing for engagement with the trailer mechanism.
